# EUROPÄISCHE PATENTSCHRIFT

(11) **EP 2 398 664 B1**
(45) Veröffentlichungstag und Bekanntmachung des Hinweises auf die Patenterteilung: **16.10.2013**
(21) Anmeldenummer: 10710185.9
(22) Anmeldetag: 23.02.2010
(51) Int. Cl.: B60K 15/04

(54) **SICHERHEITSELEMENT FÜR EINEN DIESEL-KRAFTSTOFFBEHÄLTER ZUR UNTERBINDUNG EINER FEHLBETANKUNG**
SAFETY ELEMENT FOR A DIESEL FUEL CONTAINER TO PREVENT FILLING OF WRONG FUEL
ÉLÉMENT DE SÉCURITÉ POUR UN RÉSERVOIR DE CARBURANT DIESEL, DESTINÉ À EMPÊCHER DE REMPLIR UN CARBURANT FAUX

(30) Priorität: 23.02.2009 DE 102009009998
(43) Veröffentlichungstag der Anmeldung: 28.12.2011
(73) Patentinhaber: Tecinnovation GmbH, 40882 Ratingen (DE)
(72) Erfinder: TSIBERIDIS, Konstantinos, 74076 Heilbronn (DE)
(74) Vertreter: K & H Bonapat
(86) Internationale Anmeldenummer: PCT/EP2010/001112
(87) Internationale Veröffentlichungsnummer: WO 2010/094508

(56) Entgegenhaltungen:
- WO-A1-2008/059228
- GB-A- 2 435 037
- US-A1- 2005 000 592

## Beschreibung

Die Erfindung betrifft ein Einsatzelement, das in der Einfüllöffnung eines für Dieselkraftstoff bestimmten Behälters zu installieren ist, sowie einen Kraftstoffbehälter selbst, der mit Elementen des Einsatzelements in Integralbauweise versehen ist. Derartige Kraftstoffbehälter können in Kraftfahrzeugen integriert oder als mobile Behälter in Form eines Trag- oder Ersatzkanisters ausgeführt sein.

Die Behälter weisen eine Einfüllöffnung auf, durch die sie u.a. auch tankstellenseitig mit Hilfe einer in die Einfüllöffnung eingeführten Zapfpistole befüllt werden können. Da an einer Tankstelle und selbst auch an ein und derselben Zapfsäule verschiedene Treibstoffe gezapft werden können, besteht hier generell die Gefahr, dass aufgrund von Unachtsamkeit anstelle des Dieselkraftstoffes Benzin in den Kraftstoffbehälter eingefüllt wird, wenn die falsche Zapfpistole gewählt wird.

Kraftstofftanks von Kraftfahrzeugen sollen bei deren Produktion zukünftig mit Vorrichtungen in der Einfüllöffnung versehen werden, die ein solches Fehlbetanken verhindern sollen. So ist es beispielsweise gemäß der DE 101 27 751 A1 bekannt, einen Kreuzflügel oder ein Rohr-Formstück im Einfüllstutzen des Tanks integral vorzusehen, das zwar in das Auslaufrohr einer Diesel-Zapfpistole einschiebbar ist, wegen seiner Größe jedoch nicht in ein Benzin-Zapfpistolenauslaufrohr passt. Zum Nachrüsten bereits bestehender Tanks ist hier keine Lösung aufgezeigt. Im Übrigen nehmen die in der genannten DE 101 27 751 A1 vorgeschlagenen Integral-Ausführungsformen keine Rücksicht auf Strömungseigenschaften des aus der Zapfpistole auslaufenden Kraftstoffes.

Ein Einsatzelement nach dem Oberbegriff des Anspruchs 1 und ein Kraftstofftank oder Tragkanister nach dem Oberbegriff des Anspruchs 12 sind aus der GB 2 435 037 A bekannt.

Es ist daher Aufgabe der vorliegenden Erfindung, einen für Dieselkraftstoff bestimmten Kraftstoffbehälter derart zu konditionieren, dass die Gefahr einer tankstellenseitigen Betankung mit falschem Treibstoff weitgehend eliminiert ist.

Gelöst wird diese Aufgabe durch die Bereitstellung eines Einsatzelementes gemäß Anspruch 1, das in eine Einfüllöffnung oder einen Einfüllstutzen eines für Dieselkraftstoff bestimmten Kraftstoffbehälters einsetzbar ist. Alternativ wird die Aufgabe gemäß Anspruch 12 durch Vorsehen eines Kraftstoffbehälters gelöst, der ein KFZ-Tank oder ein tragbarer Kanister sein kann und in dem eine spezielle Ausführungsform des Einsatzelementes integral implementiert ist.

Grundgedanke der Erfindung ist es, sich die unterschiedlichen Auslaufrohre der Zapfpistolen von einerseits Dieselkraftstoff und andererseits den Benzin-Arten zunutze zu machen, um ein Betanken eines für Diesel bestimmten Behälters mit falschem Kraftstoff zu verhindern. Alle Zapfpistolen sind in ihren Abmessungen am Austrittsende des Auslaufrohres genormt, wobei die Auslaufrohre von Dieselzapfpistolen einen größeren Durchmesser aufweisen als die Auslaufrohre der Benzinzapfpistolen.

Gemäß der vorliegenden Erfindung ist ein Einsatzelement vorgesehen, das in die Befüllöffnung, bzw. in den Einfüllstutzen des Kraftstoffbehälters einzusetzen ist, wobei das Einsatzelement ein in die Behälteröffnung einpassbares langgestrecktes rohrförmiges Halteelement aufweist, in dem ein parallel zum Halteelement langgestrecktes Formstück gehalten ist, dessen QuerschnittsAbmessung an seiner freien Stirnseite einerseits kleiner ist als der Innendurchmesser eines Auslaufrohres einer Dieselzapfpistole jedoch andererseits größer ist als der Innendurchmesser eines Benzinzapfpistolen-Auslaufrohres. Während also vereinfacht gesagt, sich das Auslaufrohr einer Dieselkraftstoff-Zapfpistole problemlos auf das Formstück des Einsatzelementes aufschieben lässt, ist dies für ein Zapfpistolen-Auslaufrohr für Benzin nicht möglich, weil der Querschnitt des Formstücks ein Aufschieben verhindert. Ferner ist ein an der Innenwand des Halteelements koaxial verschiebbares Betätigungselement vorgesehen, das in Richtung zur Auslaufseite hinter der Stirnseite des Formstücks zurückbleibend angeordnet ist, welches Betätigungselement bei dessen Verschiebung in Richtung zur Auslaufseite des Halteelements eine Verschlussklappe zu betätigen vermag, die an der Auslaufseite des Halteelements nachfolgend dem Betätigungselement angeordnet ist. Die Verschlussklappe kann die verbleibende Einfüllöffnung dicht abschließen, wobei sie eine außen umlaufende Dichtlippe haben kann.

In seiner Funktion hat das erfinderische Grundprinzip zur Folge, dass dann, wenn das passende Auslaufrohr einer Dieselzapfpistole auf obiges Formstück aufgeschoben wird, das Auslaufrohrende bei weiterem Einschieben der Zapfpistole auf das Betätigungselement auftrifft und dieses in Einschubrichtung zu Verschieben vermag, wodurch die Verschlussklappe geöffnet wird.

Das Formstück kann in der Form eines ebenen Flügels, aber auch in der Form eines Kreisringes, bzw. eines Kreisring-Segments ausgebildet sein. Im Falle eines Kreisring-Segmentes hat das Formstück vorteilhafterweise in seinem Querschnitt einen Winkel von im Wesentlichen 180° bis 270°.

Die Verschlussklappe, die in ihrer Ruhestellung die Einlauföffnung in den Kraftstoffbehälter vollständig zu verschließen vermag, ist mit einer Feder vorgespannt. Diese Federvorspannung der Verschlussklappe kann auch in vorteilhafter Weise automatisch zu einer Federvorspannung des Betätigungselementes führen, das durch die in die Schließposition drängende Verschlussklappe gleichermaßen in seine Ruhestellung gedrängt wird. Dies geschieht beispielsweise, indem die Verschlussklappe eine Hebelwirkung auf das Betätigungselement ausübt. Dies ist kann dann der Fall sein, wenn das Betätigungselement auf der Verschlussklappe aufliegt. Natürlich ist es ebenso möglich, dass Betätigungselement mit einer eigenen Federvorspannung zu versehen.

Das Formstück ist vorteilhaft als dünnwandiges Bauteil ausgeführt, so dass im aufgeschobenen Zustand einer Dieselkraftstoff-Zapfpistole auf das besagte Formstück ein ausreichender Strömungsquerschnitt im Auslaufrohr der Zapfpistole verbleibt, durch den der Dieselkraftstoff in dem Behälter einfließen kann. Es ist klar, dass, je dünnwandiger das Formstück im Querschnitt ist, umso größer der verbleibende Strömungsquerschnitt ist.

Da das Formstück an seinem der Einfüllöffnungsseite gegenüberliegenden Ende am Halteelement festzulegen ist, muss es eine Länge aufweisen, die es ermöglicht, dass das Zapfpistolen-Auslaufrohr ausreichend tief in den Kraftstoffbehälter eingeschoben werden kann.

Durch das erfindungsgemäße Einsatzelement können bestehende Diesel-Kraftstoffbehälter nachgerüstet werden, indem das Einsatzelement, d.h. das im Wesentlichen rohrförmige Halteelement in einen Einfüllstutzen des Kraftstoffbehälters eingeschoben wird. Vorteilhaft kann hierzu vorgesehen sein, dass das Halteelement einen Anschlagring aufweist, mit dem die Einsatztiefe des Einsatzelementes in den Einfüllstutzen begrenzt ist. Mit anderen Worten kommt der Anschlagring beim vollständigen Einschieben des Einsatzelementes auf der Öffnung des Einfüllstutzens zu liegen und schließt diese ab.

Um das Einsatzelement auch verschließen zu können, kann an der EinfüllÖffnungsseite des Anschlagringes eine Rohrmuffe vorgesehen sein, die ein Außengewinde für einen mit Innengewinde versehen Verschlussdeckel aufweist; Gleichermaßen können an der Rohrmuffe Bajonett-Verschlussnasen angeordnet sein, die den Deckel mit komplementären Rastnuten verschließen lassen.

Gemäß einer vorteilhaften Ausführungsform ragt das Formstück über die Öffnungsebene des Halteelements ab. Damit befindet sich das Formstück bei im Einfüllstutzen eines Behälters angeordneter Position gut sichtbar in diesem, so dass beim Aufsetzen einer Benzin-Zapfpistole sofort erkannt wird, warum sich diese nicht in den Einfüllstutzen des Kraftstoffbehälters, d.h. in das Einsatzelement einbringen lässt.

Zum Arretieren des rohrförmigen Halteelements im Einfüllstutzen eines Kraftstoffbehälters ist entweder vorgesehen, dass das Halteelement an seinem in den Einfüllstutzen des Behälters einragenden Mantel ein Außengewinde aufweist, mit dem das Halteelement an der Schließvorrichtung für den eigentlichen Tankdeckel des Einfüllstutzens des Kraftstoffbehälters verschraubt werden kann; Alternativ kann vorgesehen sein, dass an dem in den Einfüllstutzen ragenden Mantel des Halteelements Bajonett-Nasen vorgesehen sind, die mit dem für den eigentlichen Tankdeckel am Einfüllstutzen vorgesehenen Schließelement einen Bajonett-Verschluss bilden.

Gemäß einer vorteilhaften Ausführungsform ist vorgesehen, dass das Formstück zentrisch und koaxial im rohrförmigen Halteelement gehalten ist - dies wird in vorteilhafterweise dadurch realisiert, dass das Halteelement an seinem innen liegenden Ende an einem Kreisring festgelegt ist, der in das Haltelement eingeschoben wird. Mit anderen Worten hat der Kreisring einen Außendurchmesser, der im Wesentlichen dem Innendurchmesser des rohrförmigen Halteelements entspricht. Durch die Wand des Halteelements kann ein Sicherungsstift an dem Kreisring angreifen, um das Formteil an seiner vorbestimmten Position im Halteelement zu halten.

Auf das Formstück kann nun ein weiterer Kreisring des Betätigungselements aufgeschoben werden, der im Wesentlichen die Dimensionen eines Dieselzapfpistolen-Auslaufrohres hat. An diesem zweiten Kreisring befindet sich in vorteilhafter Ausführungsform ein den ersten Kreisring des Formstücks durchgreifender Betätigungsarm, der beim Aufschieben des zweiten Kreisringes bis zum Aufsitzen auf den ersten Kreisring durch das Einschieben des Betätigungsarmes die Verschlussklappe zu öffnen vermag. Gemäß einer weiteren vorteilhaften Ausführungsform ist vorgesehen, dass das Halteelement an dessen Rohrwandung eine Ablauföffnung aufweist. Diese Ablauföffnung kann oberhalb oder unterhalb der Verschlussklappe vorgesehen sein. Diese Ablauföffnung soll ermöglichen, dass ein über die Einsatztiefe des Einsatzelementes von der Einfüllöffnung bis zum Verschlussdeckel versehentlich eingefüllter falscher Kraftstoff ablaufen kann, ohne in den Behälterinnenraum zu gelangen. Es ist hierzu zu beachten, dass es sich lediglich um einige Milliliter falschen Treibstoffes handeln kann, da lediglich das Einfüllvolumen entsprechend Zylindergröße des Halteelements bis zum geschlossenen Verschlussdeckel gefüllt werden kann.

Geht man nun davon aus, dass das Einsatzelement eine Verwendung bei in Kraftfahrzeugen integral eingebauten Kraftstofftanks findet, so hat der Einfüllstutzen immer eine etwas geneigte Einbaustellung. Bei einer geneigten Einbaustellung fließt der fälschlicherweise eingefüllte Kraftstoff an der Bodenseite des rohrförmigen Halteelements entlang, so dass die Ablauföffnung auch nachfolgend der Verschlussklappe in Laufrichtung des Kraftstoffes angeordnet sein kann. Dann kann sich die Ablauföffnung in einer Position zur Verschlussklappe befinden, bei der die Verschlussklappe im aufgeschwenkten Zustand die Ablauföffnung zudeckt.

Weiter ist vorteilhaft vorgesehen, dass das Halteelement an seiner Einlaufseite eine zur Auslaufseite hin gerichtete Verjüngung aufweist, mit der ein in die Öffnung des Einsatzelementes einzusteckendes Zapfpistolen-Auslaufrohr auf die Stirnseite des Formstücks geführt wird.

Schließlich ist in vorteilhafter Weise vorgesehen, dass die Verschlussklappe ein Verrastelement aufweist, das mit einem komplementären Verrastglied am Halteelement zusammenwirkt. Dies kann eine Verriegelung in Form einer in eine Ausnehmung des Halteelementes eingreifende Klinke der Verschlussklappe sein oder vice versa. Wesentlich dabei ist, dass diese Verriegelung nicht etwa durch die Kraft aufgrund eines Auftreffens von Kraftstoff entriegelt wird - vielmehr ist die Verrieglung durch ein Verschieben des Betätigungselementes zu entriegeln. Das gewährleistet, dass nur dann, wenn die richtige Diesel-Zapfpistole gewählt wurde und das Einsatzelement eingeschoben wurde, d.h. ein Verschieben des Betätigungselementes erfolgt, die Verschlussklappe geöffnet werden kann. Zu diesem Zweck kann das Betätigungselement an der Vernegelungs-Ausnehmung entlang geschoben werden, sodass die Verriegelungsklinke der Verschlussklappe zurückgedrängt wird und die Verriegelung damit aufgehoben ist. Dann ist die Verschlussklappe lediglich noch entgegen ihrer Federvorspannung in die Offen-Stellung zu drücken. Mit anderen Worten ist die Kraft, mit der die Verschlussklappe in ihrer dichtenden Schließstellung gehalten wird, nicht durch die Einschubkraft der Zapfpistole zu überwinden. Letztere beträgt nur ein Bruchteil dieser Schließkraft, nämlich der Federvorspannkraft.

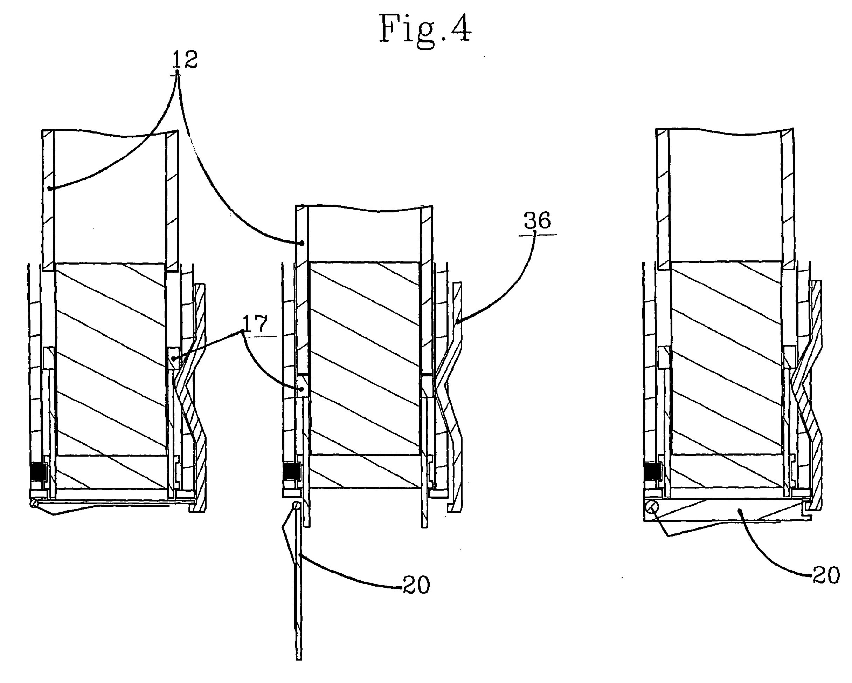

Wird die Klinke an der Verschlussklappe angeordnet, ist darauf zu achten, dass die einführende Zapfpistole mit ihrem Auslaufrohr-Ende nicht an der Klinke hängen bleibt. Die Klinke ist dann an geeigneter Stelle der Klappe zu fixieren, oder es ist dafür Sorge zu tragen, dass die Verschlussklappe derart tief im Einsatzelement, bzw. Einfüllstutzen angeordnet ist, dass das Auslaufrohr-Ende selbst bei maximaler Einschubtiefe des Auslaufrohres nicht über die Verschlussklappe hinaus geschoben werden kann. Gemäß einer anderen Ausführungsform ist auch eine Art Rampe auf der Verschlussklappe möglich, auf die das Auslaufrohr aufläuft und hinter der sich die Klinke der Verschluss-Klappe befindet, sodass das Auslaufrohr über die Klinke gehoben wird. Alternativ ist es möglich, die Verschlussklappe in einer Arretierfeder, die außerhalb vom Halteelement angeordnet ist, verriegeln zu lassen (siehe hierzu Ausführungsbeispiel in Fig. 4)

Damit auch weiterhin bei einer Reduzierung der Einfüllöffnung bei eingesteckter Zapfpistole Luft aus dem Tank austreten kann, weist das Halteelement an seiner Innenfläche in vorteilhafterweise Ausnehmungen in axialer Längsrichtung auf, damit Luft aus dem Behälter zwischen der Außenwand des Zapfpistolenauslaufrohres und der besagten Innenfläche des Halteelements austreten kann.

Die Erfindung sieht ferner einen Kraftstofftank für Diesel gemäß Anspruch 10 oder 11 oder einen mobilen Tragekanister vor, der für Dieselkraftstoff bestimmt ist.

Die Erfindung wird nun nachfolgend mit Bezug auf die beigefügten Zeichnungen näher beschrieben, in denen
- - Fig. 1: eine dreifache Schnittansicht des erfindungsgemäßen Einsatzelementes zeigt, wobei in zwei Ansichten ein Zapfpistolen-Auslaufrohr eingeschoben;
- - Fig. 2: eine Draufsicht auf das Formstück mit Betätigungselement zeigt, und

- - Fig. 3: eine vergrößerte Teilansicht des Betätigungselementes der Verschlussklappe offenbart.
- - Fig. 4: ein Ausführungsdetail zur Verriegelung der Verschlussklappe

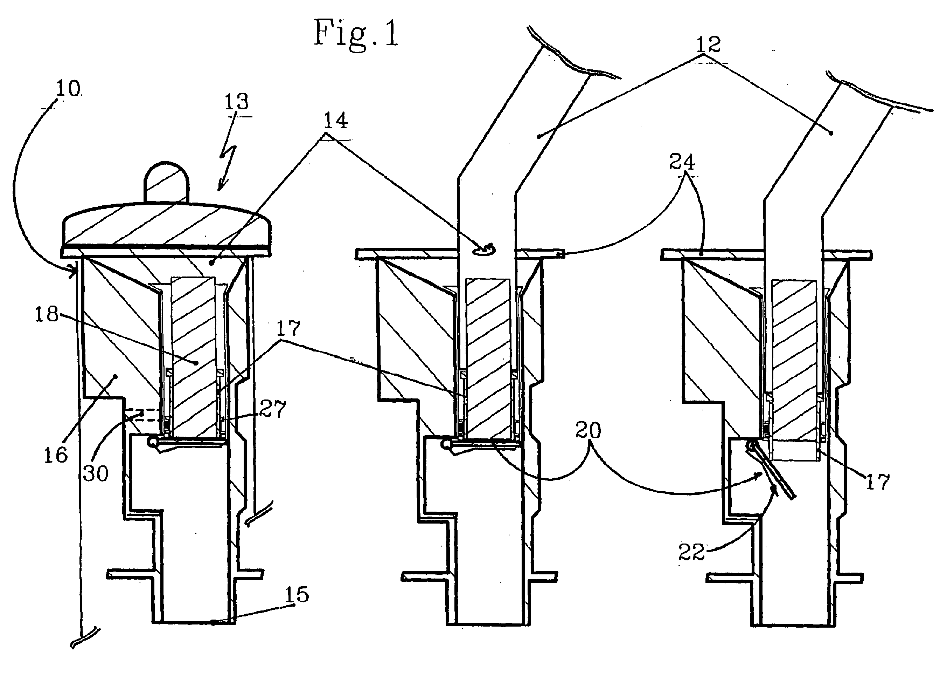

Figur 1 zeigt das erfindungsgemäße Einsatzelement 13, wie es in einer Einfüllöffnung 10 eines Kraftstoffbehälters zu positionieren ist. In der linksseitigen Darstellung von Figur 1 ist das Einsatzelement 13 im verschlossenen Zustand gezeigt, bei dem ein Verschlussdeckel, ggf. der ursprüngliche Tankverschlussdeckel aufgesetzt ist. Gemäß der mittleren Darstellung von Figur 1 ist bei abgenommenem Deckel das Auslaufrohr 12 der Zapfpistole in das Einsatzelement 13 eingeschoben, und zwar bereits über das Formstück 18 bis zum Auftreffen auf das Betätigungselement 17. In der rechtsseitigen Darstellung von Figur 1 ist das Zapfpistolenauslaufrohr 12 weiter eingeschoben dargestellt, so dass es das Betätigungselement 17 bereits teilweise in Axialrichtung zur Auslaufseite 15 verschoben und damit die Verschlussklappe 20 teilweise verschwenkt hat.

Das Betätigungselement 17 hat am oberen Ende, d.h. dem Auftreffpunkt des Auslaufrohrendes der Zapfpistole einen Kreisring, mit dem die Einschubtiefe des Betätigungselementes 17 begrenzt ist, nämlich bis dieser Kreisring auf den Kreisring 27 stößt, mit dem das Formstück 18 im Halteelement 16 fixiert ist. Insofern ist in der rechtsseitigen Darstellung von Fig. 1 zu erkennen, dass selbst bei maximaler Einschubtiefe des Zapfpistolen-Auslaufrohres, letzteres nicht ganz vorbei an dem Verschlussdeckel geschoben werden kann. Dieser Aspekt hat dann Bedeutung, wenn sich an der Verschlussklappe eine Verriegelungsklinke befindet (nicht gezeigt) die mit einem Verriegelungsfenster (nicht gezeigt) am Halteelement zusammenwirkt. Im verriegelten Zustand ist die im Fenster befindliche Klinke relativ zum Betätigungselement so angeordnet, dass das Betätigungselement beim Verschieben aus dessen Ruhestellung die Klinke aus dem Fenster lösen und damit die Verriegelung aufheben kann. Dies kann realisiert sein, indem das Betätigungselement einen Stift aufweist, der auf eine konische Fläche der Klinke trifft, wobei der Stift nachfolgend in einer in Einschubrichtung vorgesehnen Ausnehmung des Halteelements unterhalb des Fensters weitergeführt wird.

An der Einlaufseite 14 des Halteelements 16 ist ein konisch zur Auslaufseite 15 hin gerichteter Trichter vorgesehen, der auf einen Rohransatz des Halteelements mündet. Diese Reduzierung realisiert eine eineindeutige EinschubPosition eines Zapfpistolen-Auslaufrohres 12. Das Formstück 18 ist gut sichtbar aus dieser reduzierten Einfüllöffnung abragend für jeden erkennbar, der eine Tankbefüllung vornimmt. Diese Reduzierung ermöglicht es ferner, einen zum Verschwenken der Verschlussklappe 20 erforderlichen Raum im Halteelement 16 vorzusehen.

Mit seinem Anschlagring 24 ist die Einsetztiefe des Einsatzelementes in einen Einfüllstutzen vorgegeben.

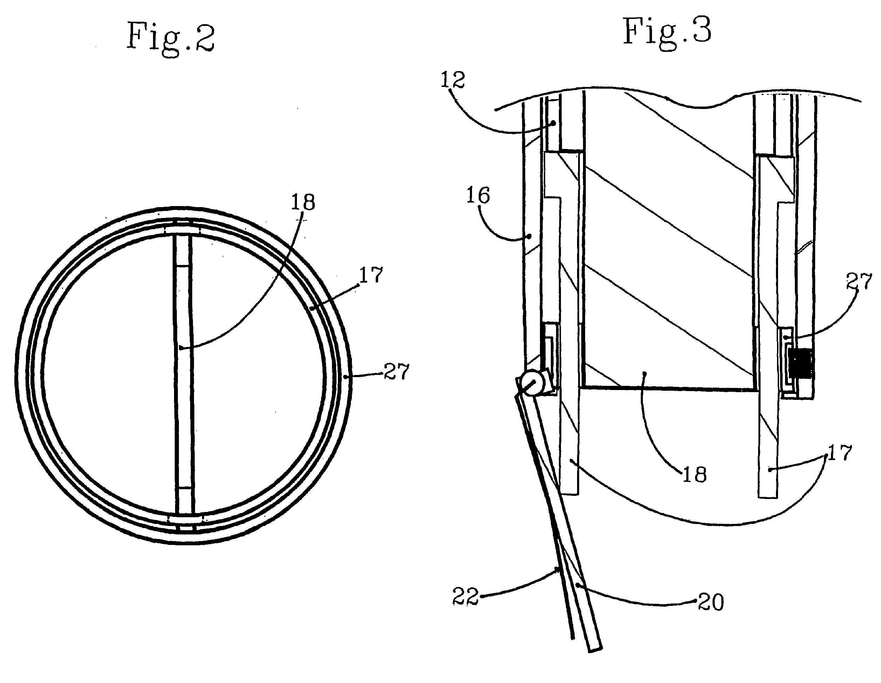

Figur 2 zeigt eine Draufsicht auf das Formstück 18, das mittels des Kreisrings 27 am Innenumfang des rohrförmigen Halteelements 16 gehalten ist, und das Betätigungselement 17. Aus dieser Zeichnung wird deutlich, dass das Betätigungselement 17 koaxiale Aussparungen dort aufweisen muss, wo die unteren Stege des Halteelements 18 das Halteelement mit dem Kreisring 27 verbinden.

Figur 3 zeigt die Verschlussklappe 20 und das Betätigungselement 17 in vergrößertem Detail. Das Ende eines Zapfpistolen-Auslaufrohres 12 ist auf das Betätigungselement 17 aufgeschoben worden, und hat dieses in Richtung zur Auslaufseite 15 des Halteelements teilweise verschoben. Durch diese Verschiebung des Betätigungselementes 17 wurde die Verschlussklappe 20 teilweise geöffnet. Der das Haltelement fixierende Kreisring 27 ist am Halteelement 16 mittels eines Stiftes - als schwarzer Block markiert - gehalten. Die Verschlussklappe 20 ist mit einer Feder 22 vorgespannt, mit der auch das Betätigungselement in seine Ruheposition gedrängt wird, sowie das Auslaufrohr der Zapfpistole herausgezogen wird und die Verschlussklappe zurückschwenkt.

Fig. 4 zeigt ein Detail, gemäß dem die Verschlussklappe 20 mittels einer Arretierfeder 36 verriegelt wird. Hierzu wird die Arretierfeder 36 vom Betätigungselement 17 bewegt: Beim Herabdrücken des Betätigungselements wird die am Außenumfang des Halteelements positionierte Arretierfeder so zurückgedrängt, dass die Verschlussklappe 20 freigegeben wird (siehe mittlere Darstellung von Fig. 4). Während der Einschubdauer der Zapfpistole bleibt die Arretierfeder zurückgedrängt. Erst wenn das Betätigungselement wieder in seine Ruheposition verschoben wird, gelangt auch die Arretierfeder in ihre die Verschlussklappe 20 haltende Ruhestellung, und zwar erst im letzten Moment dieser Rückbewegung des Betätigungselementes, wenn die Verschlussklappe dichtend bereits geschlossen hat. In der rechtsseitigen Darstellung von Fig. 4 ist ein dickeres Verschlussdeckelelement 20 gezeigt.

### Bezugszeichenliste

- 10: Einfüllöffnung eines Kraftstoffbehälters
- 12: Zapfpistole, bzw. dessen Auslaufrohr
- 13: Einsatzelement
- 14: Einlaufseite
- 15: Auslaufseite
- 17: Betätigungselement
- 16: Halteelement
- 18: Formstück
- 20: Verschlussklappe
- 22: Feder
- 24: Anschlagring
- 27: Kreisring
- 30: Ablauföffnung
- 36: Arretierfeder

## Patentansprüche

1. Einsatzelement (13) für einen Diesel-Kraftstoffbehälter, das zum Zweck einer tankstellenseitigen Zapfpistolen-Befüllung mit Dieselkraftstoff in der Einfüllöffnung (10) des Behälters, insbesondere in einen Einfüllstutzen, installierbar ist, wobei das Einsatzelement (13) ein in die Behälteröffnung einpassbares langgestrecktes im Wesentlichen rohrförmiges Halteelement (16) mit einer Einlaufseite (14) und einer Auslaufseite (15) aufweist, in dem ein parallel zum Halteelement (16) langgestrecktes Formstück (18) gehalten ist, dessen zur Einlaufseite hin abragende freie Stirnseite im Außendurchmesser einerseits kleiner ist als der Innendurchmesser eines Auslaufrohres (12) einer Dieselzapfpistole jedoch andererseits größer ist als der Innendurchmesser eines Benzinzapfpistolen-Auslaufrohres, **dadurch gekennzeichnet, dass** ferner ein an der Innenwand des Halteelements (16) koaxial verschiebbares Betätigungselement (17) vorgesehen ist, das in Richtung zur Auslaufseite (15) hinter der Stirnseite des Formstücks (18) zurückbleibend angeordnet ist, welches Betätigungselement (17) bei dessen Verschiebung in Richtung zur Auslaufseite (15) eine Verschlussklappe (20) zu betätigen vermag, die an der Auslaufseite (15) des Halteelements (16) nachfolgend dem Betätigungselement (17) angeordnet ist.

2. Einsatzelement (13) nach Anspruch 1,
**dadurch gekennzeichnet, dass** das Halteelement (16) einen Anschlagring (24) aufweist, mit dem die Einsatztiefe des Einsatzelements (13) in den Einfüllstutzen (10) eines Kraftstoffbehälters begrenzbar ist.

3. Einsatzelement (13) nach einem der vorangehenden Ansprüche,
**dadurch gekennzeichnet, dass** das im Halteelement (16) angeordnete Formstück (18) über die Öffnungsebene am Außenrand des Halteelements abragt.

4. Einsatzelement (13) nach einem der vorangehenden Ansprüche,
**dadurch gekennzeichnet, dass** Halteelement (16) ein Außengewinde aufweist, mit dem das Einsatzelement (13) in dem Einfüllstutzen (10) eines Kraftstoffbehälters einschraubbar ist.

5. Einsatzelement (13) nach einem der vorangehenden Ansprüche,
**dadurch gekennzeichnet, dass** das Halteelement (16) an seinem Außenumfang Nasen (36) aufweist, die zur Bildung eines Bajonett-Verschlusses mit dem am Einfüllstutzen (10) des Kraftstoffbehälters vorgesehenen Schließelement zusammenwirken.

6. Einsatzelement nach einem der vorangehenden Ansprüche,
**dadurch gekennzeichnet, dass** das Formstück (18) an seinem unteren Ende, d.h. an der Auslaufseite des Einsatzelements, mittels eines an der Innenwand des Halteelements eingepassten Kreisrings (27) am Halteelement (16) fixiert ist.

7. Einsatzelement nach einem der vorangehenden Ansprüche,
**dadurch gekennzeichnet, dass** das Halteelement (16) an dessen Rohrwandung eine Ablauföffnung (30) aufweist.

8. Einsatzelement nach einem der vorangehenden Ansprüche,
**dadurch gekennzeichnet, dass** das Halteelement (16) an seiner Einlaufseite (14) eine zur Auslaufseite gerichtete Verjüngung aufweist, mit der ein in die Öffnung des Einsatzelements einzusteckendes Zapfpistolen-Auslaufrohr (12) auf die Stirnseite des Formstücks (18) geführt wird.

9. Einsatzelement nach einem der vorangehenden Ansprüche,
**dadurch gekennzeichnet, dass** die Verschlussklappe (20) im Wesentlichen gegenüber deren Anlenkungsstelle am Halteelement (16) ein Verrastelement aufweist, das mit einem komplementären Verrastglied am Halteelement zusammenwirkt, wobei das Verrastelement durch das Betätigungselement (17) betätigt wird.

10. Einsatzelement nach Anspruch 9,
**dadurch gekennzeichnet, dass** das Verrastelement eine am Außenumfang des Halteelements positionierte Arretierfeder (36) ist, die teilweise durch ein im Halteelement vorgesehenes Fenster ragt und hier auf das Betätigungselement (17) trifft, wobei die Arretierfeder ein die Verschlussklappe haltendes Ende aufweist.

11. Für Dieselkraftstoff bestimmter Kraftstofftank oder Tragkanister, der ein Einsatzelement nach einem der Ansprüche 1 bis 9 aufweist.

12. Für Dieselkraftstoff bestimmter Kraftstofftank oder Tragkanister mit einem Einfüllstutzen, in dem ein parallel zu diesem langgestrecktes Formstück (18) gehalten ist, dessen zur Einlaufseite hin abragende freie Stirnseite im Außendurchmesser einerseits kleiner ist als der Innendurchmesser eines Auslaufrohres (12) einer Dieselzapfpistole jedoch andererseits größer ist als der Innendurchmesser eines Benzinzapfpistolen-Auslaufrohres, **dadurch gekennzeichnet, dass** ferner ein an der Innenwand eines Halteelements (16) koaxial verschiebbares Betätigungselement (17) vorgesehen ist, das in Richtung zur Tankinnenseite hinter der Stirnseite des Formstücks (18) zurückbleibend angeordnet ist, welches Betätigungselement (17) bei dessen Verschiebung in Richtung zur Tankirmenseite eine Verschlussklappe (20) zu betätigen vermag, die in Befüllrichtung nachfolgend dem Betätigungselement (17) angeordnet ist.

## Claims

1. An insert element (13) for a diesel fuel container which, for the purpose of filling with diesel fuel by means of a fuel nozzle at a filling station, can be installed in the filling opening (10) of the container, in particular in a filler neck, the insert element (13) having an elongated, substantially tubular holding element (16) which can be fitted into the container opening and which has an inlet side (14) and an outlet side (15), in which insert element (13) a moulded part (18) elongated parallel to the holding element (16) and the free face side of which, projecting towards the inlet side, has an external diameter which on the one hand is smaller than the internal diameter of an outlet pipe (12) of a diesel fuel nozzle, but on the other hand is larger than the internal diameter of a petrol fuel nozzle outlet pipe, is held, **characterised in that**, in addition, an actuation element (17) which can be displaced coaxially on the inner wall of the holding element (16) is provided, which actuation element (17) is arranged set back behind the face side of the moulded part (18) in the direction of the outlet side (15) and is capable, when displaced in the direction of the outlet side (15), of actuating a closure flap (20) which is arranged on the outlet side (15) of the holding element (16) after the actuation element (17).

2. The insert element (13) according to Claim 1,
**characterised in that** the holding element (16) has a stop ring (24) with which the insertion depth of the insert element (13) into the filler neck (10) of a fuel container can be limited.

3. The insert element (13) according to any of the preceding claims,
**characterised in that** the moulded part (18) arranged in the holding element (16) projects over the opening plane on the outer edge of the holding element.

4. The insert element (13) according to any of the preceding claims,
**characterised in that** the holding element (16) has an external thread with which the insert element (13) can be screwed into the filler neck (10) of a fuel container.

5. The insert element (13) according to any of the preceding claims,
**characterised in that** the holding element (16) has on its outer circumference projections (36) which interact with the closing element provided on the filler neck (10) of the fuel container to form a bayonet closure.

6. The insert element according to any of the preceding claims,
**characterised in that** the moulded part (18) is fixed at its lower end, i.e. on the outlet side of the insert element, to the holding element (16) by means of a circular ring (27) which is fitted onto the inner wall of the holding element.

7. The insert element according to any of the preceding claims,
**characterised in that** the holding element (16) has an outflow opening (30) on its tubular wall.

8. The insert element according to any of the preceding claims,
**characterised in that** the holding element (16) has on its inlet side (14) a tapered portion directed toward the outlet side and with which a fuel nozzle outlet pipe (12) which is to be plugged into the opening in the insert element is guided onto the face side of the moulded part (18).

9. The insert element according to any of the preceding claims,
**characterised in that** the closure flap (20) has a latching element substantially opposite the coupling point thereof to the holding element (16), which latching element interacts with a complementary latching member on the holding element, the latching element being actuated by the actuation element (17).

10. The insert element according to Claim 9,
**characterised in that** the latching element is a locking spring (36) positioned on the outer circumference of the holding element and which projects partially through a window provided in the holding element and strikes the actuation element (17) here, the locking spring having an end that holds the closure flap.

11. A fuel tank or fuel can which is intended for diesel fuel and which has an insert element according to any of Claims 1 to 9.

12. A fuel tank or fuel can intended for diesel fuel, having a filler neck in which a moulded part (18) elongated parallel thereto and the free face side of which projecting towards the inlet side has an external diameter that is on the one hand smaller than the internal diameter of an outlet pipe (12) of a diesel fuel nozzle, but on the other hand is larger than the internal diameter of a petrol fuel nozzle outlet pipe, is held, **characterised in that**, in addition, an actuation element (17) which can be displaced coaxially on the inner wall of the holding element (16) is provided, which actuation element (17) is arranged set back behind the face side of the moulded part (18) in the direction of the inner side of the tank and is capable, when displaced in the direction of the inner side of the tank, of actuating a closure flap (20) which is arranged after the actuation element (17) in the filling direction.

## Revendications

1. Elément à insérer (13) pour un réservoir de carburant diesel, qui peut être installé dans l'ouverture de remplissage (10) du réservoir, en particulier dans la tubulure de remplissage, afin de permettre de faire le plein de carburant diesel en station-service avec un pistolet verseur, l'élément à insérer (13) possédant un élément de maintien (16) allongé, de forme sensiblement tubulaire, s'ajustant dans l'ouverture du réservoir, avec un côté d'entrée (14) et un côté de sortie (15), dans lequel est maintenue une pièce de forme (18) allongée, parallèlement à l'élément de maintien (16), dont la face avant libre, faisant saillie en direction du côté d'entrée, possède un diamètre extérieur qui est d'une part inférieur au diamètre intérieur d'un tube de sortie (12) d'un pistolet verseur diesel mais d'autre part supérieur au diamètre intérieur d'un tube de sortie d'un pistolet verseur pour essence, **caractérisé par le fait qu'**il est par ailleurs prévu sur la paroi intérieure de l'élément de maintien (16) un élément d'actionnement (17) coulissant coaxialement, qui est retenu dans la direction du côté de sortie (15) derrière la face avant de la pièce de forme (18), cet élément d'actionnement (17), lorsqu'il est repoussé dans la direction du côté de sortie (15), pouvant actionner un volet de fermeture (20), qui est disposé sur le côté de sortie (15) de l'élément de maintien (16) suivant l'élément d'actionnement (17).

2. Elément à insérer (13) selon la revendication 1, **caractérisé par le fait que** l'élément de maintien (16) présente une bague de butée (24), avec laquelle la profondeur d'insertion (13) peut être limitée dans la tubulure de remplissage (10) d'un réservoir de carburant.

3. Elément à insérer (13) selon l'une des revendications précédentes, **caractérisé par le fait que** la pièce de forme (18) disposée dans l'élément de maintien (16) fait saillie par la surface d'ouverture sur le bord extérieur de l'élément de maintien.

4. Elément à insérer (13) selon l'une des revendications précédentes, **caractérisé par le fait que** l'élément de maintien (16) présente un filetage extérieur, avec lequel l'élément à insérer (13) peut être vissé dans la tubulure de remplissage (10) d'un réservoir de carburant.

5. Elément à insérer (13) selon l'une des revendications précédentes, **caractérisé par le fait que** l'élément de maintien (16) présente des ergots (36) sur sa circonférence extérieure, qui coopèrent pour la formation d'une fermeture à baïonnette avec l'élément de fermeture prévu sur la tubulure de remplissage (10).

6. Elément à insérer selon l'une des revendications précédentes, **caractérisé par le fait que** la pièce de forme (18) est fixée sur l'élément de maintien (16) au niveau de son extrémité inférieure, c'est-à-dire sur le côté de sortie de l'élément à insérer, au moyen d'un anneau circulaire (27) adapté sur la paroi intérieure de l'élément de maintien (16).

7. Elément à insérer selon l'une des revendications précédentes, **caractérisé par le fait que** l'élément de maintien (16) présente une ouverture de décharge (30) sur sa paroi de tuyau.

8. Elément à insérer selon l'une des revendications précédentes, **caractérisé par le fait que** l'élément de maintien (16) présente sur son côté d'entrée (14) un rétrécissement dirigé vers le côté de sortie, avec lequel un tube de sortie (12) d'un pistolet verseur à enficher dans l'ouverture de l'élément à insérer est amené sur la face avant de la pièce de forme (18).

9. Elément à insérer selon l'une des revendications précédentes, **caractérisé par le fait que** le volet de fermeture (20) présente essentiellement un élément d'encliquetage sur l'élément de maintien (16) par rapport à son point d'articulation, qui coopère avec une partie d'encliquetage complémentaire sur l'élément de maintien, l'élément d'encliquetage étant actionné par l'élément d'actionnement (17).

10. Elément à insérer selon la revendication 9, **caractérisé par le fait que** l'élément d'encliquetage est un ressort d'arrêt (36) positionné sur la circonférence extérieure de l'élément de maintien, qui fait saillie partiellement à travers une fenêtre prévue dans l'élément de maintien et rencontre ici l'élément d'actionnement (17), le ressort d'arrêt présentant une extrémité retenant le volet de fermeture.

11. Réservoir de carburant ou jerricane portable destiné au carburant diesel, qui présente un élément à insérer selon les revendications 1 à 9.

12. Réservoir de carburant ou jerricane portable destiné au carburant diesel avec une tubulure de remplissage, dans laquelle une pièce de forme (18) allongée est maintenue parallèle à ce dernier, dont la face avant libre, faisant saillie en direction du côté d'entrée, possède un diamètre extérieur qui est d'une part inférieur au diamètre intérieur d'un tube de sortie (12) d'un pistolet verseur diesel mais d'autre part supérieur au diamètre intérieur d'un tube de sortie d'un pistolet verseur pour essence, **caractérisé par le fait qu'**il est par ailleurs prévu sur la paroi intérieure d'un élément de maintien (16) un élément d'actionnement (17) coulissant coaxialement, qui est retenu dans la direction de l'intérieur de la cuve derrière la face avant de la pièce de forme (18), cet élément d'actionnement (17), lorsqu'il est repoussé dans la direction de l'intérieur de la cuve, pouvant actionner un volet de fermeture (20), qui est disposé en direction du remplissage suivant l'élément d'actionnement (17).
